# EUROPEAN PATENT APPLICATION

(11) **EP 2 204 090 A1**
(43) Date of publication of application: **07.07.2010**
(21) Application number: 09016079.7
(22) Date of filing: 29.12.2009
(51) Int. Cl.: A01K 83/00

(54) **Fishing hook**

(30) Priority: 03.01.2009 GB 0900030; 04.12.2009 GB 0921274
(71) Applicant: Christie, Andrew Lewis, Kita Ando Shizuoka Shi Shizuoka 420 0881 (JP)
(72) Inventor: Christie, Andrew Lewis, Kita Ando Shizuoka Shi Shizuoka 420 0881 (JP)
(74) Representative: Tart, Keith Raymond

(57) **Abstract**

A fishing hook (10) having a shank (16) leading to a bent portion (14) and then a barb (12); further comprising a bait attachment member (20) integral with or directly connected to the shank; the attachment member has second sharp point (22) and also retaining portion which prevents bait becoming prematurely detached from said attachment member. The retaining portion may comprise a barb distal from the second sharp point or a corkscrew shaped member.

## Description

### Technical Field

The present invention relates to improved fishing hooks, for use by anglers.

### Background Art

A traditional hook as used in coarse fishing comprises a sharp ended point that in use penetrates the fish's mouth; this point is at one end of a generally semi-circular bent portion; the other end of the bent portion leads to a straight shank portion that terminates at an eye to which is connected a fishing line. Often, the sharp ended point incorporates a barb that helps secure the fish to the hook and so prevents it from prematurely unhooking. Bait is usually positioned directly on the hook; Parts of the hook (shank/point) can sometimes protrude from the bait and sometimes the bait can totally mask all parts of the hook, depending on fishing circumstances.

At present there are two main methods for presenting bait on or close to the hook for coarse fishing. The first method and most commonly used is to push the point of the hook directly through the bait so that the bait sits directly on the hook. The second method is to present the bait close to the hook either on the line or via an attachment device connected to the line, commonly known as 'hair rigging'. The attachment device might be a 'bait band' or 'bait spike'. The principle behind this method is, as the fish sucks in the bait they also suck in the hook and it is therefore difficult for the fish to eject the bait from its mouth.

However, there are certain disadvantages with both of the above methods. The first method encounters problems when bait is very soft and is therefore more difficult to keep on the hook whilst fishing. Bait that is too hard may mask/obstruct the hook when a fish takes it in its mouth and therefore diminish the hooks hooking potential. This can increase the chance of a fish being able to eject the bait from its mouth once it has sucked it in. Also very hard baits cannot be hooked directly.

The second method of 'hair rigging' bait has advantages over the first. The hook remains unmasked/unobstructed by the bait therefore it retains its hooking potential. Also a fish finds it more difficult to eject the bait and hook from its mouth if the hook is unmasked/unobstructed. Hard baits are able to be 'hair rigged'. Some disadvantages however are, softer baits are difficult to 'hair rig' and if attachment devices like 'bait bands' or 'bait spikes' are used they can break from the line. In certain circumstances the hook may also be more visible to the fish.

### Disclosure of Invention

An aim of the present invention is to provide an improved fishing hook, especially such a hook for use in coarse fishing. A particular aim of the invention is to provide means of easily and quickly attaching bait to the side of a hook; in such a way that it is unlikely to become prematurely detached. A further aim is to provide a fishing hook which in use has a sharp pointed end which is at least partly obscured from view by bait attached to a further portion of the hook. Another aim is to provide a hook that is more likely to engage a fish when the bait is taken. A yet further aim is to provide a fishing hook, for use in hair rigging, that allows bait to be attached in a faster and more simple way.

In one aspect the invention comprises a fishing hook comprising a shank leading to a bent portion and then a first sharp point or barb **characterized in that** it has a bait attachment member integral with or directly connected to said shank; said attachment member comprising a second sharp point and also retaining portion which prevents bait becoming prematurely detached from said attachment member.

Preferably, the retaining portion is corkscrew, spiral or helical in shape. The bait retaining member may comprise a straight rod or spike with a barb or barbs located nearer the shank than the second sharp point. Preferably, the barb may be located proximal the shank. The longitudinal axis of the attachment member and/or retaining member may be inclined to the longitudinal axis of the shank at angle in the range 45° to 90°. The longitudinal axis of the attachment member may comprise the longitudinal axis of the rod, spike or corkscrew.

Preferably, the second sharp point points away from the first sharp point. In this case the longitudinal axis of the attachment member is preferably at an angle in the range 90°-180° to the bent portion when viewed from above; that is in plan view.

In another aspect the invention comprises a fishing hook comprising a shank leading to a bent portion and then a first sharp point or barb **characterized in that** it has a bait attachment member integral with or directly connected to said shank; said attachment member comprising corkscrew, spiral or helically shaped portion terminating in a second sharp point. The attachment member may have a longitudinal axis which is inclined to the longitudinal axis of the shank at angle in the range 45° to 90°. The longitudinal axis of the attachment member may comprise the longitudinal axis of said rod, spike or corkscrew. Preferably, the second sharp point points away from the first sharp point. In this case the longitudinal axis of the attachment member is preferably at an angle in the range 90°-180° to the bent portion when viewed from above; that is in plan view.

In another aspect the invention comprises a fishing hook comprising a shank leading to a bent portion and then a barb **characterized in that** it has a bait attachment member integral with or directly connected to said shank; said attachment member comprising an elongate portion with at least one barb; wherein the longitudinal axis of the elongate portion is inclined to the longitudinal axis of the shank at an acute angle.

The invention may comprise a fishing hook having a shank leading to a bent portion and then a barb and further comprising a bait attachment member integral with or directly connected to the shank; the attachment member having a second sharp point and also retaining portion which prevents bait becoming prematurely detached from said attachment member. The retaining portion may comprise a barb distal from the second sharp point or a corkscrew shaped member.

The bait attachment member is preferably a screw or coil nature made from the same material as the overall hook and preferably it will protrude from the back of the shank in the opposite direction to the bend and point of the hook.

The hook and bait attachment device that protrudes from the shank may differ in design, shape and size to accommodate different types of bait. The proportion between bend, gape, shank, and bait attachment member may also vary depending on intended fishing style and target species.

### Brief Description of the Drawings

The invention will now be described, solely by way of example, by reference to the accompanying diagrammatic figures in which:
Figure 1 shows a side view of fishing hook according to a first embodiment of the invention;
Figure 2 shows a plan view of the hook of Figure 1;
Figure 3 shows a perspective view of the hook of Figure 1 and indicates the position of attached bait;
Figure 4 shows a fishing hook according to a second embodiment of the present invention;
Figure 5 shows a fishing hook according to a third embodiment of the invention; and
Figure 6 shows fishing hook according to a fourth embodiment of the invention.

### Detailed Description

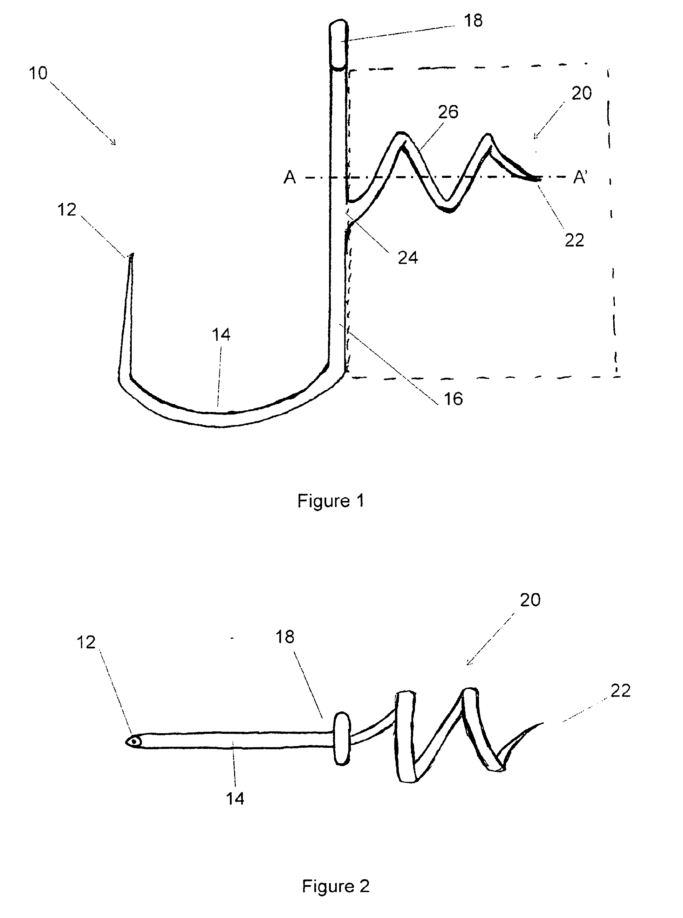

A preferred embodiment will now be described by reference to Figures 1-3.

In a preferred embodiment shown in Figure 1 and 2, the hook (10) comprised a sharp ended point (12) that in use penetrates the fish's mouth; this point is at one end of a generally semi-circular bent portion (14); the other end of the bent portion leads to a straight shank portion (16) that terminates in an eye (18) to which is connected to a fishing line. A coiled portion (18) has a sharp ended point (20) at one end; the other end (22) is joined to the straight shank portion (16). Preferably, the axis of the coiled portion (18) (denoted A-A' in Figure 1) subtends at an angle of between 45° and 90° to the longitudinal axis of the straight shank portion. More preferably, the axis of the coiled portion (18) (denoted A-A' in Figure 1) subtends at an angle of between 70° and 90° to the longitudinal axis of the straight shank portion. Preferably, the axis A-A' lies in generally the same plane of the rest of the hook; and so the pointed end (20) of the coiled portion preferably points away from the sharp ended point (12). Preferably, the coiled portion is integrally formed with the shank portion (12) and preferably is joined about half way down the shank portion. The coiled portion may be helical or spiral shaped. Preferably, the coiled portion (18) has between 1 and 5 turns; more preferably between 1 and 3 turns; and most preferably about 2 turns. The eye (18) may be replaced by a spade end. A spade end is a flattened portion which prevents the line (which is then tied to the shank) from becoming disconnected. The sharp ended point (12) may also include a barb.

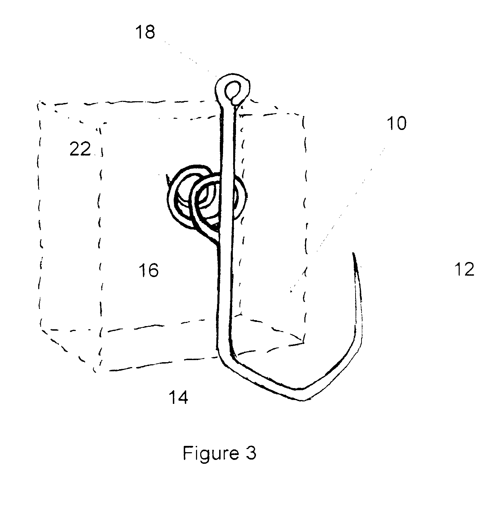

Figure 3 shows a perspective view of the embodiment of Figures 1 and 2 and also indicates (see broken lines) the position in which a lump of bait may be attached when in use. The bait can conveniently be screwed onto the coiled portion. Such attachment is facilitated by the pointed end (20) of the coiled portion. The coil (for example helical or spiral) ensures that the bait is firmly secured and so unlikely to become prematurely detached from the hook. The position in which the bait is held relative to the rest of the hook also helps obscure the shank of the hook (16) and also the sharp ended point (12) from fish; while at the same time leaving this sharp ended point uncovered so that when a fish bites the bait it is more likely to become hooked.

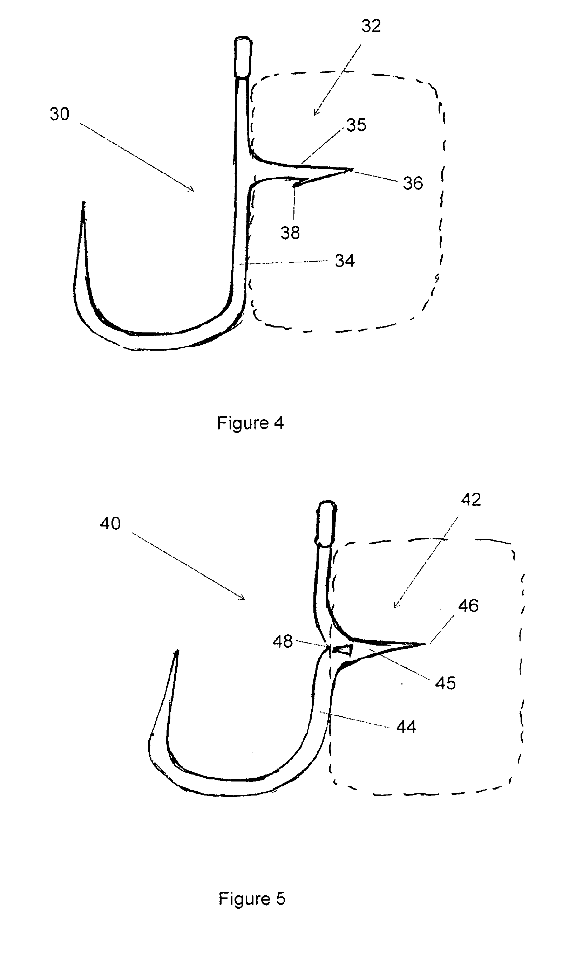

Figure 4 shows a side view of a second embodiment of the invention where the hook (30) has an alternative bait attachment device (32) again protruding from the back of the shank (34) of the hook. This bait attachment device (32) comprises is a spike (35) with a sharp point (36) and a barb (38) located just behind the sharp point (36) and is particularly suited for use with harder baits for example, hard pellets. The sharp point (36) assists attachment of the bait and the barb (38) helps prevent premature detachment of the bait. The position in which the bait is held relative to the rest of the hook also helps obscure the shank of the hook (34) and also the sharp ended point (36) from fish; while at the same time leaving this sharp ended point uncovered so that when a fish bites the bait it is more likely to become hooked.

Figure 5 shows a side view of a third embodiment of the invention where the hook (40) has an alternative bait attachment device (42) again protruding from the back of the shank (44) of the hook. This bait attachment device (42) comprises is a spike (45) with a sharp point (46) and at least one barb or gripper tooth (48) located near the junction of the spike (44) and the shank (44) and again is particularly suited for use with harder baits for example, hard pellets. The sharp point (46) assists attachment of the bait and the barb (48) helps prevent premature detachment of the bait. The position in which the bait is held relative to the rest of the hook also helps obscure the shank of the hook (44) and also the sharp ended point (46) from fish; while at the same time leaving this sharp ended point uncovered so that when a fish bites the bait it is more likely to become hooked.

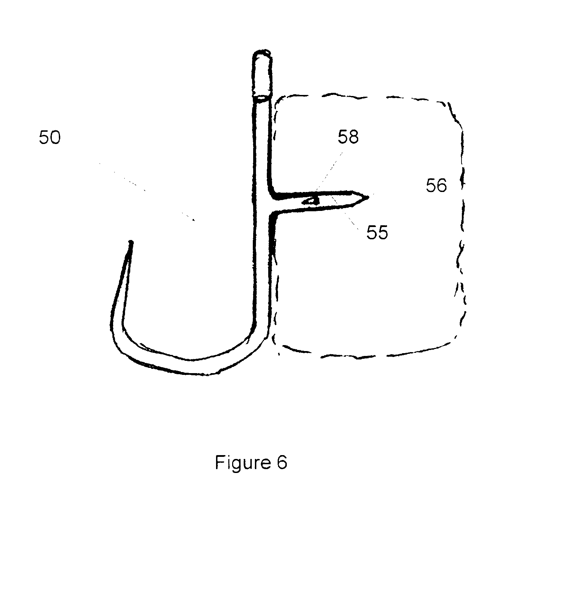

Figure 6 shows an embodiment of the invention similar to that illustrated in Figure 5 except that at least one tooth or barb (58) is located about half way along the spike or shank (54).

## Claims

1. A fishing hook (10) comprising a straight shank (16) leading to a bent portion (14) and then a first sharp point (12) or barb **characterized in that** it has a bait attachment member (20) integral with or directly connected to said shank; said attachment member comprising a second sharp point (22) and also a retaining portion which prevents bait becoming prematurely detached from said attachment member.

2. A hook according to Claim 1 where the retaining portion (26) is corkscrew, spiral or helical in shape.

3. A hook (40, 50) according to Claim 1 where the bait attachment member further comprises a straight rod or spike and the retaining portion takes the form of a barb or barbs (48, 58) located nearer the shank (16) than the second sharp point (22).

4. A hook (40) according to Claim 3 where a barb (48) is located proximal the shank.

5. A hook according to any preceding claim where the attachment member has a longitudinal axis which is inclined to the longitudinal axis of the shank at angle in the range 45° to 90°.

6. A hook according to Claim 5 as dependant upon Claim 2 where the longitudinal axis of the attachment member comprises the longitudinal axis of said rod, spike or corkscrew.

7. A hook according to any preceding claim where the second sharp point (22) points away from the first sharp point (12).

8. A hook according to Claim 7 where longitudinal axis of the attachment member is at an angle in the range 90°-180° to the bent portion when viewed from above; that is in plan view.

9. A fishing hook (10) comprising a shank (16) leading to a bent portion (14) and then a first sharp point (12) or barb **characterized in that** it has a bait attachment member (20) integral with or directly connected to said shank; said attachment member comprising corkscrew (26), spiral or helically shaped portion terminating in a second sharp point (22).

10. A hook according to Claim 9 where the attachment member has a longitudinal axis which is inclined to the longitudinal axis of the shank at angle in the range 45° to 90°.

11. A hook according to Claim 9 or 10 where the longitudinal axis of the attachment member comprises the longitudinal axis of said rod, spike or corkscrew.

12. A hook according to any of Claims 9 to 11 where the second sharp point (22) points away from the first sharp point (12).

13. A hook according to Claim 12 where longitudinal axis of the attachment member is at an angle in the range 90°-180° to the bent portion when viewed from above, that is in plan view.
